# EUROPEAN PATENT APPLICATION

(11) **EP 4 782 936 A1**
(43) Date of publication of application: **29.07.2026**
(21) Application number: 25224526.1
(22) Date of filing: 17.12.2025
(51) Int. Cl.: G03G 15/20

(54) **ELECTROPHOTOGRAPHIC MEMBER, FIXING DEVICE, IMAGE FORMING APPARATUS, AND METHOD OF FORMING SURFACE LAYER OF ELECTROPHOTOGRAPHIC MEMBER**

(30) Priority: 24.01.2025 JP 2025010969; 08.10.2025 JP 2025170439
(71) Applicant: FUJIFILM Business Innovation Corp., Minato-ku Tokyo (JP)
(72) Inventor: NISHIMURA, Iori, Ebina-shi, Kanagawa (JP); KUBOTA, Ryosuke, Ebina-shi, Kanagawa (JP); MATSUMOTO, Koichi, Ebina-shi, Kanagawa (JP); KIMURA, Jun, Ebina-shi, Kanagawa (JP); KINUTA, Yasuhiko, Ebina-shi, Kanagawa (JP); TAKAHASHI, Yoshinori, Ebina-shi, Kanagawa (JP); NAGAMATSU, Taiki, Ebina-shi, Kanagawa (JP); YOSHIKAWA, Ryohei, Ebina-shi, Kanagawa (JP); INAGAKI, Tomotake, Ebina-shi, Kanagawa (JP); KOMURO, Hitoshi, Ebina-shi, Kanagawa (JP); SEKO, Masayuki, Ebina-shi, Kanagawa (JP)
(74) Representative: Becker Kurig & Partner Patentanwälte mbB

(57) **Abstract**

An electrophotographic member includes a foamed elastic layer and a surface layer that is provided on the foamed elastic layer, in which the surface layer contains a polysiloxane compound having a T unit represented by a formula: [R¹SiO_{3/2}]ₘ (in the formula, R₁ represents an organic group, m represents an integer of 2 or more, and at least one R₁ among a plurality of R¹'s present in the T unit is a group including at least one of an alkyl group or an aryl group).

## Description

### BACKGROUND OF THE INVENTION

### (i) Field of the Invention

The present invention relates to an electrophotographic member, a fixing device, an image forming apparatus, and a method of forming a surface layer of an electrophotographic member.

### (ii) Description of Related Art

In an image forming apparatus (such as a copy machine, a facsimile machine, and a printer) using an electrophotographic method, a toner image formed on a surface of an image holder is transferred to the surface of a recording medium and fixed on the recording medium such that an image is formed.

For example, JP2012-150270A discloses "roller for a fixing device, that a first solid elastic layer, a foamed elastic layer, a second solid elastic layer, and a release layer are laminated in this order on a core metal, in which a high thermal conductive filler is disposed in the second solid elastic layer".

JP2021-076709A discloses "fixing belt in which a value of a viscoelastic modulus R (%) satisfies 65.0 < R < 71.0".

### SUMMARY OF THE INVENTION

An object of the present invention is to provide an electrophotographic member including a foamed elastic layer and a surface layer provided on the foamed elastic layer, in which the electrophotographic member has release properties without using a fluorine material.

Methods for achieving the above object include the following aspects.
<1> According to a first aspect of the present disclosure, there is provided an electrophotographic member including:
   a foamed elastic layer; and
   a surface layer that is provided on the foamed elastic layer,
   in which the surface layer contains a polysiloxane compound having a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group).
<2> According to a second aspect of the present disclosure, there is provided the electrophotographic member according to <1>,
   in which the group including at least one of an alkyl group or an aryl group may be a group including an alkyl group.
<3> According to a third aspect of the present disclosure, there is provided the electrophotographic member according to <1> or <2>, further including:
   an interlayer provided between the foamed elastic layer and the surface layer.
<4> According to a fourth aspect of the present disclosure, there is provided the electrophotographic member according to <3>,
   in which a storage elastic modulus of the interlayer may be larger than a storage elastic modulus of the surface layer.
<5> According to a fifth aspect of the present disclosure, there is provided the electrophotographic member according to <4>,
   in which the storage elastic modulus of the interlayer may be 1 GPa or more and 10 GPa or less, and
   the storage elastic modulus of the surface layer may be 500 MPa or more and 3 GPa or less.
<6> According to a sixth aspect of the present disclosure, there is provided the electrophotographic member according to <4> or <5>,
   in which a thermal conductivity λ of the interlayer in a film thickness direction may be 0.3 W/m·K or more.
<7> According to a seventh aspect of the present disclosure, there is provided a fixing device including:
   a first rotating body; and
   a second rotating body disposed in contact with an outer surface of the first rotating body,
   in which at least one of the first rotating body or the second rotating body is constituted of the electrophotographic member according to any one of <1> to <6>.
<8> According to an eighth aspect of the present disclosure, there is provided an image forming apparatus including:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to <7>, that fixes the toner image on the surface of the recording medium.
<9> According to a ninth aspect of the present disclosure, there is provided a method of forming the surface layer of the electrophotographic member according to any one of <1> to <6>, the method including:
   forming the surface layer by a blade coating method.
<10> According to a tenth aspect of the present disclosure, there is provided a method of forming the surface layer of the electrophotographic member according to any one of <1> to <6>, the method including:
   forming the surface layer by a dip coating method.
<11> According to an eleventh aspect of the present disclosure, there is provided a method of forming the surface layer of the electrophotographic member according to any one of <1> to <6>, the method including:
   forming the surface layer by a spray coating method.
<12> According to a twelfth aspect of the present disclosure, there is provided a method of forming the surface layer of the electrophotographic member according to any one of <1> to <6>, the method including:
   forming the surface layer by a ring coating method.
<13> According to a thirteenth aspect of the present disclosure, there is provided a method of forming the surface layer of the electrophotographic member according to any one of <1> to <6>, the method including:
   forming the surface layer by a brush coating method.

According to <1>, there is provided an electrophotographic member including a foamed elastic layer and a surface layer provided on the foamed elastic layer, in which the electrophotographic member has release properties without using a fluorine material.

According to <2>, there is provided an electrophotographic member that has excellent release properties as compared to a case where the group including at least one of an alkyl group or an aryl group is a group including a phenyl group.

According to <3>, there is provided an electrophotographic member in which a surface property of the surface layer is less likely to be affected by a surface property of the foamed elastic layer, as compared to a case where the surface layer is directly provided on the foamed elastic layer.

According to <4>, there is provided an electrophotographic member in which a surface property of the surface layer is less likely to be affected by a surface property of the foamed elastic layer, as compared to a case where the storage elastic modulus of the interlayer is smaller than the storage elastic modulus of the surface layer.

According to <5>, there is provided an electrophotographic member in which a surface property of the surface layer is less likely to be affected by a surface property of the foamed elastic layer, as compared to a case where the storage elastic modulus of the interlayer and the storage elastic modulus of the surface layer do not satisfy the above-described ranges.

According to <6>, there is provided an electrophotographic member in which end part temperature rise can be suppressed as compared to a case where the thermal conductivity λ of the interlayer in the film thickness direction is less than 0.3 W/m·K.

According to <7> or <8>, there is provided a fixing device or an image forming apparatus, including an electrophotographic member including a foamed elastic layer and a surface layer provided on the foamed elastic layer, in which the electrophotographic member has release properties without using a fluorine material.

According to <9>, <10>, <11>, <12>, or <13>, there is provided a method of forming a surface layer of an electrophotographic member that has release properties and has reduced coating defects without using a fluorine material, by a blade coating method, a dip coating method, a spray coating method, a ring coating method, or a brush coating method.

### BRIEF DESCRIPTION OF THE DRAWINGS

Exemplary embodiment(s) of the present invention will be described in detail based on the following figures, wherein:
FIG. 1 is a view schematically showing a configuration of an example of a fixing device according to the present exemplary embodiment; and
FIG. 2 is a view schematically showing a configuration of an example of an image forming apparatus according to the present exemplary embodiment.

### DETAILED DESCRIPTION OF THE INVENTION

Hereinafter, present exemplary embodiments of the present invention will be described. The following descriptions and examples merely illustrate the exemplary embodiments, and do not limit the scope of the exemplary embodiments.

Regarding the numerical ranges described in stages in the present exemplary embodiment, the upper limit value or lower limit value of a numerical range may be replaced with the upper limit value or lower limit value of another numerical range described in stages. In addition, in the present exemplary embodiment, the upper limit value or lower limit value of a numerical range may be replaced with values described in examples.

In the present exemplary embodiments, the term "step" includes not only an independent step but a step which is not clearly distinguished from other steps as long as the intended purpose of the step is achieved.

In the present exemplary embodiment, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present exemplary embodiments, each component may include a plurality of corresponding substances. In the present exemplary embodiment, in a case where the amount of each component in a composition is mentioned, and there are two or more kinds of substances corresponding to each component in the composition, unless otherwise specified, the amount of each component means the total amount of two or more kinds of the substances present in the composition.

### <Electrophotographic Member>

The electrophotographic member according to the present exemplary embodiment includes a foamed elastic layer and a surface layer provided on the foamed elastic layer.

The surface layer contains a polysiloxane compound having a T unit represented by a formula: [R¹SiO_{3/2}]ₘ. Hereinafter, this polysiloxane compound will also be referred to as "polysiloxane compound SQ".

Here, in the formula, R¹ represents an organic group, m represents an integer of 2 or more, and at least one R¹ among a plurality of R¹'s present in the T unit is a group including at least one of an alkyl group or an aryl group.

In recent years, due to increased awareness of sustainable development goals (SDGs), the developments of materials with reduced environmental burden have been promoted. As one of the materials, a material other than a fluorine material is required. The fluorine material is a material including a fluorine atom.

Therefore, the electrophotographic member according to the present exemplary embodiment contains the polysiloxane compound SQ having release properties in the surface layer provided on the foamed elastic layer. As a result, the electrophotographic member according to the present exemplary embodiment is an electrophotographic member having release properties without using a fluorine material.

Hereinafter, details of the electrophotographic member according to the present exemplary embodiment will be described.

The electrophotographic member according to the present exemplary embodiment includes a foamed elastic layer and a surface layer provided on the foamed elastic layer.

The electrophotographic member may include an interlayer provided between the foamed elastic layer and the surface layer.

The electrophotographic member may include a base material as a lower layer of the foamed elastic layer.

The electrophotographic member may have a roll shape or a belt shape.

In particular, in a case where the electrophotographic member includes the interlayer, a surface property of the surface layer is less likely to be affected by a surface property of the foamed elastic layer. The foamed elastic layer has large surface roughness due to air bubbles. Therefore, in a case where the surface layer is directly provided on the foamed elastic layer, the surface layer is likely to have roughness due to the surface roughness of the foamed elastic layer. Therefore, in a case where the interlayer is provided, the surface property of the surface layer is less likely to be affected by the surface property of the foamed elastic layer. As a result, in a case where the electrophotographic member is applied to a fixing member, image unevenness due to pressure unevenness caused by the surface property of the foamed elastic layer can be suppressed.

### [Base Material]

Examples of the base material include a cylindrical base material formed of a metal (aluminum, SUS, iron, copper, or the like), an alloy, ceramics, a fiber-reinforced metal (FRM), or the like.

An outer diameter and a thickness of the cylindrical base material may be, for example, an outer diameter of 10 mm or more and 50 mm or less. In a case of the aluminum cylindrical base material, the thickness may be, for example, 0.5 mm or more and 4 mm or less; and in a case of the SUS (stainless steel) cylindrical base material or the iron cylindrical base material, the thickness may be, for example, 0.1 mm or more and 2 mm or less.

Examples of the base material also include a metal belt and a heat-resistant resin belt.

Examples of the metal belt include a metal belt formed of nickel, aluminum, stainless steel, or the like.

Examples of the heat-resistant resin belt include a heat-resistant resin belt formed of polyimide, polyamideimide, polyphenylene sulfide, polyether ether ketone, polybenzimidazole, or the like.

The heat-resistant resin belt may contain a conductive powder or the like in order to control a volume resistivity. Specifically, examples of the resin belt include a polyimide resin belt in which carbon black is added and dispersed. In addition, examples of the heat-resistant resin belt also include a belt formed by combining both ends of a long polyimide sheet in a puzzle shape and performing thermocompression using a thermocompression member to obtain a belt-shaped product.

Furthermore, the term "heat-resistant" means a characteristic that melting or decomposition does not occur in a case of reaching a raised temperature of the fixing device (for example, a fixing temperature).

A thickness of the belt base material is, for example, preferably 20 µm or more and 200 µm or less, more preferably 30 µm or more and 150 µm or less, and still more preferably 40 µm or more and 130 µm or less.

A metal layer may be provided on the base material as necessary. In a case where the metal layer is provided, the metal layer may be formed in a single layer or may be formed in multiple layers. The metal layer formed in a single layer may be an electromagnetic induction metal layer that generates heat by electromagnetic induction. In addition, the metal layer formed in multiple layers may be formed in a three-layer structure of, for example, an underlayer metal layer, an electromagnetic induction metal layer, and a metal protective layer.

An adhesive may be applied onto a surface of the base material. That is, the adhesive is used as necessary, and the base material (or the metal layer on the base material) and the elastic layer or the surface layer may be laminated with the adhesive interposed therebetween. The adhesive is not particularly limited, and examples thereof include an adhesive compound having a hydrogen-bonding silyl group (-SiH) in which a hydrogen atom is bonded.

### [Foamed Elastic Layer]

For example, it is preferable that the foam elastic layer is a layer that is restored to an original shape even though deformation occurs due to external force application of 100 Pa.

Examples of an elastic material constituting the foamed elastic layer include isoprene rubber, chloroprene rubber, epichlorohydrin rubber, butyl rubber, polyurethane rubber, silicone rubber, fluororubber, styrene-butadiene rubber, butadiene rubber, nitrile rubber, ethylene-propylene rubber, epichlorohydrin-ethylene oxide copolymer rubber, epichlorohydrin-ethylene oxide-allyl glycidyl ether copolymer rubber, ethylene-propylene-diene terpolymer rubber (EPDM), acrylonitrile-butadiene copolymer rubber (NBR), natural rubber, and blended rubber thereof.

Among these, from the viewpoint of heat resistance, thermal conductivity, insulation, and the like, the elastic material is, for example, more preferably silicone rubber.

Examples of the silicone rubber include RTV silicone rubber, HTV silicone rubber, and liquid silicone rubber; and specific examples thereof include polydimethyl silicone rubber (MQ), methyl vinyl silicone rubber (VMQ), methyl phenyl silicone rubber (PMQ), and fluorosilicone rubber (FVMQ).

As the silicone rubber, for example, silicone rubber that is crosslinked generally by an addition reaction is preferable. In addition, various types of functional groups are known for silicone rubber, and for example, dimethyl silicone rubber having a methyl group, methyl phenyl silicone rubber having a methyl group and a phenyl group, vinyl silicone rubber having a vinyl group (vinyl group-containing silicone rubber), or the like is preferable.

Furthermore, as the silicone rubber, for example, vinyl silicone rubber having a vinyl group is more preferable, and silicone rubber that has an organopolysiloxane structure having a vinyl group and a hydrogen organopolysiloxane structure having a hydrogen atom bonded to a silicon atom (SiH) is still more preferable.

The foamed elastic layer may contain other additives. Examples of the other additives include a filler, a softener (paraffin-based softener and the like), a processing aid (stearic acid and the like), an aging inhibitor (amine-based aging inhibitor and the like), and a vulcanizing agent (sulfur, a metal oxide, a peroxide, and the like).

A film thickness of the foamed elastic layer is, for example, preferably 30 µm or more and 15 mm or less, and more preferably 100 µm or more and 10 mm or less.

### [Interlayer]

Examples of the interlayer include a resin layer of a polyimide resin (PI resin), a polyamide-imide resin (PAI resin), a polyether ketone resin (PEEK resin; for example, an aromatic polyether ether ketone resin or the like), a polyphenylene sulfide resin (PPS resin), a polyetherimide resin (PEI resin), a polyester resin, a polyamide resin, a polycarbonate resin, a silicone resin, a polymethylpentene resin, and the like.

The interlayer is, for example, preferably a PEEK resin or a PEI resin. As a result, the surface property of the surface layer is less likely to be affected by the surface property of the foamed elastic layer.

The interlayer may contain other additives. Examples of the other additives include a filler, a softener (paraffin-based softener and the like), a processing aid (stearic acid and the like), an aging inhibitor (amine-based aging inhibitor and the like), and a vulcanizing agent (sulfur, a metal oxide, a peroxide, and the like).

A film thickness of the interlayer is, for example, preferably 1 µm or more and 100 µm or less, and more preferably 10 µm or more and 50 µm or less.

### [Surface Layer]

The surface layer contains the polysiloxane compound SQ.

The surface layer may be a surface layer containing the polysiloxane compound SQ as a principal component (for example, a matrix material that is to be a binding material), or a surface layer containing the polysiloxane compound as an additive. The surface layer may contain other additives.

Here, the surface layer containing the polysiloxane compound SQ as a principal component (for example, a matrix material that is to be a binding material) refers to a surface layer having the highest amount of the polysiloxane compound.

### (Polysiloxane Compound SQ)

The polysiloxane compound SQ is a polysiloxane compound having a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group).

The polysiloxane compound SQ may be a polysiloxane compound having a D unit represented by a formula: (R²R³SiO_{2/2})ₙ (in the formula, R² and R³ are organic groups, and n is an integer of 2 or more), together with the T unit represented by the formula: [R¹SiO_{3/2}]ₘ.

For example, from the viewpoint of improving the release properties of the surface layer, it is preferable that at least one of R² or R³ among a plurality of R²'s and R³'s present in the D unit is a group including at least one of an alkyl group or an aryl group.

In a case where the polysiloxane compound SQ having the T unit and the D unit is applied, flexibility is imparted to the surface layer.

In the T unit and the D unit, the organic group of R¹, R², and R³ in the formulae represents, for example, a hydroxyl group, a siloxy group, a hydrocarbon group, a hydrocarbon group in which one or a plurality of methylene groups are replaced with a carbonyl group, a hydrocarbon group in which one or a plurality of carbon atoms are replaced with a heteroatom (an oxygen atom, a nitrogen atom, or a sulfur atom), a group including a reactive group, or a group obtained by combining these groups.

Examples of the siloxy group described as the organic group represented by R¹, R², and R³ include a monoalkylsiloxy group, a dialkylsiloxy group, and a trialkylsiloxy group. The siloxy group is, for example, preferably a dialkylsiloxy group or a trialkylsiloxy group, and more preferably a trialkylsiloxy group.

Examples of the hydrocarbon group described as the organic group represented by R¹, R², and R³ include an aliphatic hydrocarbon group and an aromatic hydrocarbon group.

Examples of the aliphatic hydrocarbon group include a linear, branched, or alicyclic saturated aliphatic hydrocarbon group, and a linear, branched, or alicyclic unsaturated aliphatic hydrocarbon group.

The aliphatic hydrocarbon group is, for example, preferably a hydrocarbon group having 1 or more and 20 or less carbon atoms, and more preferably a hydrocarbon group having 1 or more and 15 or less carbon atoms.

The aliphatic hydrocarbon group may be substituted with a substituent such as a halogen atom, a hydroxyl group, an amino group, and an aryl group.

Examples of the aromatic hydrocarbon group include a hydrocarbon group having 6 or more and 18 or less carbon atoms (for example, preferably 6 or more and 14 or less carbon atoms). Examples of the aromatic hydrocarbon group include a phenyl group, a naphthyl group, and an anthracenyl group.

The aromatic hydrocarbon group may be substituted with a substituent such as a halogen atom, a hydroxyl group, an amino group, an alkyl group, and an alkoxy group.

The organic group represented by R¹, R², and R³ may have a reactive group. Examples of the reactive group include a vinyl group, an allyl group, a styryl group, a maleimide group, an epoxy group, and a (meth)acryloyl group. That is, the polysiloxane compound SQ may be a cured product in which the above-described reactive group is reacted.

A plurality of R¹'s, R²'s, and R³'s present in the T unit and the D unit may be the same organic group or different organic groups.

However, at least one R¹ among the plurality of R¹'s present in the T unit is a group including at least one of an alkyl group or an aryl group.

In addition, at least one R² or R³ among the plurality of R²'s and R³'s present in the D unit is, for example, preferably a group including at least one of an alkyl group or an aryl group.

That is, at least one R¹ among the plurality of R¹'s present in the T unit is a group including at least one of an alkyl group or an aryl group.

At least one R² among the plurality of R²'s present in the D unit is a group including at least one of an alkyl group or an aryl group.

For example, it is preferable that at least one R³ among the plurality of R³'s present in the D unit is a group including at least one of an alkyl group or an aryl group.

Here, from the viewpoint of improving the release properties, as the group including an alkyl group, for example, an alkyl group itself or a siloxy group including an alkyl group is preferable. That is, at least one of the plurality of R¹, R², or R³ present in the T unit and the D unit is, for example, preferably an alkyl group or a siloxy group including an alkyl group.

From the viewpoint of improving the release properties, the alkyl group is, for example, preferably an alkyl group having 1 or more and 6 or less carbon atoms, and more preferably an alkyl group having 1 or more and 4 or less carbon atoms or an alkyl group having 1 carbon atom (that is, a methyl group).

As the group including an aryl group, for example, an aryl group itself or an aralkyl group is preferable.

Examples of the aryl group include a phenyl group and a naphthyl group.

Examples of an alkyl group in the aralkyl group include a linear or branched alkyl group having 1 or more and 4 or less carbon atoms. Examples of an aryl group in the aralkyl group include a phenyl group and a naphthyl group. Examples of the aralkyl group include a benzyl group, a 1-phenylethyl group, a 2-phenylethyl group, and a 2-methyl-2-phenylethyl group.

From the viewpoint of improving the release properties, as the group including an aryl group, for example, a phenyl group is preferable.

From the viewpoint of improving the release properties, for example, it is preferable that a presence proportion of the group including at least one of an alkyl group or an aryl group is high.

In the T unit and the D unit, m and n in the formulae represent an integer of 2 or more; and from the viewpoint of improving the release properties, for example, an integer of 8 or more is preferable, and an integer of 8 or more and 10,000 or less is more preferable.

In the T unit and the D unit, the upper limit of a ratio m/n of m and n in the formulae is, for example, preferably 100/0 or less, and more preferably 100/1 or less. In addition, the lower limit of m/n is, for example, preferably 10/90 or more, more preferably 20/80 or more, and still more preferably 25/75 or more.

The ratio m/n, that is, the ratio of the T unit and the D unit is measured as follows. The ratio m/n is calculated based on the peak ratio of the D unit (high ppm side) and the T unit (low ppm side) by solid ²⁹Si NMR.

From the viewpoint of improving the release properties, a content of the polysiloxane compound SQ with respect to the surface layer is, for example, preferably 10% by volume or more, more preferably 30% by volume or more, and still more preferably 50% by volume or more.

The polysiloxane compound SQ may be in a particle shape. A volume average particle diameter of the particle-shaped polysiloxane compound SQ is, for example, preferably 0.01 µm or more and 10 µm or less, more preferably 0.01 µm or more and 5 µm or less, and still more preferably 0.01 µm or more and 2.5 µm or less. The volume average particle diameter of the particle-shaped polysiloxane compound SQ is, for example, particularly preferably 2.5 µm or less and more preferably 1 µm or less.

In a case where the volume average particle diameter of the particle-shaped polysiloxane compound SQ is within the above-described range, the release properties are likely to be improved.

The volume average particle diameter of the particle-shaped polysiloxane compound SQ is measured as follows.

A sample is collected from the surface layer. The sample is a sample in which a cut surface along a thickness direction of the surface layer is used as an observation surface.

The observation surface of the sample is observed with a scanning electron microscope to capture an image. In the image, an area of each primary particle of the polysiloxane compound SQ is measured by image analysis, and an equivalent circle diameter thereof is calculated from this area value. The calculation of the equivalent circle diameter is carried out for 100 particles of the polysiloxane compound SQ. A 50% diameter (D50v) in the volumebased cumulative frequency of the obtained equivalent circle diameter is defined as the volume average particle diameter of the polysiloxane compound SQ.

Examples of the polysiloxane compound SQ include a polymer compound referred to as silsesquioxane (SQ) having various skeleton structures.

The polysiloxane compound SQ may have, as a skeleton structure, any of a cage-type structure (a perfect cage-type structure or a cage-type structure), a ladder-type structure, or a random structure.

### (Binding Material)

The surface layer may contain a binding material for immobilizing the polysiloxane compound SQ.

Examples of the binding material include a silicone resin, a silicone rubber, a polyimide resin, a polyether ether ketone (PEEK) resin, a polyphenylene sulfide (PPS) resin, and a polymethylpentene (PMP) resin.

Among these, as the release material, for example, a silicone resin or a silicone rubber is preferable.

Examples of the silicone resin include a methyl-based straight silicone resin, a methylphenyl-based straight silicone resin, an acrylic resin-modified silicone resin, an ester resin-modified silicone resin, an epoxy resin-modified silicone resin, and an alkyd resin-modified silicone resin.

Examples of the silicone rubber include room temperature vulcanizing (RTV) silicone rubber, high temperature vulcanizing (HTV) silicone rubber, and liquid silicone rubber; and specific examples thereof include polydimethyl silicone rubber, methylvinyl silicone rubber, methylphenyl silicone rubber, and fluorosilicone rubber.

### (Other Additives)

The surface layer may be compounded with other additives. Examples of the additive include a conductive agent, a softener (paraffin-based softener and the like), a processing aid (stearic acid and the like), and an aging inhibitor (amine-based aging inhibitor and the like).

A film thickness of the surface layer is, for example, preferably 10 µm or more and 200 µm or less, and more preferably 20 µm or more and 100 µm or less.

### (Method of Forming Surface Layer)

Examples of a method of forming the surface layer include a method of forming the surface layer by a coating method such as a blade coating method, a dip coating method, a spray coating method, a ring coating method, and a brush coating method.

The surface layer is formed by applying a coating liquid containing the above-described components and a solvent as necessary onto a substrate by the above-described coating method, and drying or drying and curing the coating liquid.

Here, examples of the substrate include a monolayer of the foamed elastic layer and a laminate including the foamed elastic layer.

Here, in the blade coating method, a spiral streak (also referred to as "spiral trace") is generated by spreading the coating liquid with a metal plate (that is, a blade). In the dip coating method or the ring coating method, a film thickness difference in an axial direction occurs due to liquid dripping. In the spray coating method, a surface roughness in a pear skin shape occurs due to coating unevenness. In this way, the surface layer is likely to have coating defects.

However, in a case where the coating liquid containing the above-described components and a solvent as necessary is used and these coating methods are applied, a surface layer having reduced coating defects can be formed.

In a case where the blade coating method is applied, the surface layer is formed as follows, for example.
(1) The substrate is fixed to an outer peripheral surface of a cylindrical mold having a width longer than the substrate.
(2) A coating device that discharges the coating liquid is moved relative to the cylindrical mold along an axial direction of the mold at a target coating speed in a state in which the axial direction of the mold is along the horizontal direction while rotating the cylindrical mold in a circumferential direction, and the coating liquid is continuously applied onto the substrate.
(3) A metal plate (that is, a blade) having a width shorter than the base material is moved along the axial direction at the same speed as the coating speed of the coating device in a state of being brought into contact with the coating liquid applied onto the base material to spread the coating liquid.
(4) The spread coating film of the coating liquid is dried or dried and cured to form the surface layer.

In a case where the dip coating method is applied, the surface layer is formed as follows, for example.
(1) The substrate is fixed to an outer peripheral surface of a cylindrical mold having a width longer than the substrate.
(2) The coating liquid is filled in a cylindrical container having a bottom, and the substrate fixed to the cylindrical mold is dipped in the coating liquid.
(3) The dipped base material is pulled up to apply the coating liquid onto the base material.
(4) The coating film of the coating liquid is dried or dried and cured to form the surface layer.

In a case where the spray coating method is applied, the surface layer is formed as follows, for example.
(1) The substrate is fixed to an outer peripheral surface of a cylindrical mold having a width longer than the substrate.
(2) A coating device that sprays the coating liquid is moved relative to the cylindrical mold along an axial direction of the mold at a target coating speed in a state in which the axial direction of the mold is along the horizontal direction while rotating the cylindrical mold in a circumferential direction, and the coating liquid is applied onto the substrate.
(3) The coating liquid is applied in a plurality of layers by repeating reciprocating movement of the coating device in the axial direction of the mold while spraying the coating liquid from the coating device to obtain a coating film.
(4) The coating film of the coating liquid is dried or dried and cured to form the surface layer.

In a case where the ring coating method is applied, the surface layer is formed as follows, for example.
(1) The substrate is fixed to an outer peripheral surface of a cylindrical mold having a width longer than the substrate.
(2) The substrate fixed to the cylindrical mold is inserted into a substrate insertion portion of a ring-shaped coating device until the substrate is exposed from the substrate insertion portion in a state in which an axial direction of the mold is along the vertical direction and the substrate is coaxial with the substrate insertion portion; the coating liquid is discharged from a side surface of the substrate insertion portion of the ring-shaped coating device while moving the ring-shaped coating device and the substrate relative to each other in the substrate axial direction to apply the coating liquid onto the substrate;
   here, as the ring-shaped coating device, for example, a coating device in which a resin sheet having a hole is fixed to a bottom surface of a cylindrical metal container having a hole in the bottom surface, the resin sheet being coaxial with the hole of the cylindrical metal container, with a gap is applied; the bottom surface of the cylindrical metal container and the hole of the resin sheet are the substrate insertion portion; the coating liquid is poured between the bottom surface of the ring-shaped coating device and the resin sheet to discharge the coating liquid from the side surface of the base material insertion portion.
(3) The coating film of the coating liquid is dried or dried and cured to form the surface layer.

In a case where the brush coating method is applied, the surface layer is formed as follows, for example.
(1) The substrate is fixed to an outer peripheral surface of a cylindrical mold having a width longer than the substrate.
(2) A brush having a width larger than the substrate and impregnated with the coating liquid is brought into contact with the substrate while moving the brush relative to the mold along an axial direction of the mold at a target coating speed in a state in which the axial direction of the mold is along a horizontal direction while rotating the cylindrical mold in a circumferential direction, and the coating liquid is applied onto the substrate.
(3) The coating liquid is applied in a plurality of layers by repeating reciprocating movement of the brush in the axial direction of the mold to obtain a coating film.
(4) The coating film of the coating liquid is dried or dried and cured to form the surface layer.

### [Characteristics of Each Layer in Electrophotographic Member]

### (Storage Elastic Modulus)

In the electrophotographic member according to the present exemplary embodiment, for example, it is preferable that a storage elastic modulus of the interlayer is larger than a storage elastic modulus of the surface layer. As a result, the surface property of the surface layer is less likely to be affected by the surface property of the foamed elastic layer.

Specifically, the ranges of the storage elastic modulus of each layer are as follows so that the surface property of the surface layer is less likely to be affected by the surface property of the foamed elastic layer.

The storage elastic modulus of the interlayer is, for example, preferably 1 GPa or more and 10 GPa or less, and more preferably 3 GPa or more and 5 GPa or less.

The storage elastic modulus of the surface layer is, for example, preferably 500 MPa or more and 5 GPa or less, and more preferably 1 GPa or more and 3 GPa or less.

The storage elastic modulus of each layer can be adjusted by selecting the type or grade of the material of each layer, and the addition amount of a reinforcing filler or the polysiloxane compound SQ.

A method of measuring the storage elastic modulus of each layer is as follows.

A test piece having a width of 4 mm and a length of 20 mm is cut out from each layer. The test piece is placed in a dynamic viscoelasticity tester (RHEOVIBRON, manufactured by ORIENTEC CO., LTD.). The storage elastic modulus is measured under conditions of a temperature of 30°C, a frequency of 10 Hz, and an amplitude of 10 µm.

### (Thermal Conductivity)

A thermal conductivity λ of the interlayer in a film thickness direction is, for example, preferably 0.3 W/m·K or more, and more preferably 0.5 W/m·K or more.

The temperature of the electrophotographic member may be increased due to heat during fixing or the like. In particular, in a case where the electrophotographic member is applied to the fixing member, the temperature rise is noticeable.

Here, the temperature is not excessively increased in a central portion of the electrophotographic member that is in direct or indirect contact with a recording medium. On the other hand, the temperature is likely to be excessively increased in an end part of the electrophotographic member that is not in direct or indirect contact with the recording medium. This is because heat is transferred from the electrophotographic member to the recording medium.

In addition, since the foamed elastic layer is foamed, the foamed elastic layer has a property of storing the heat and being less likely to transfer the heat.

Therefore, the thermal conductivity λ of the interlayer in the film thickness direction is set to be within the above-described range. In this case, the heat of the foamed elastic layer is likely to be transferred to the interlayer. Therefore, the end part temperature rise of the electrophotographic member can be suppressed.

The end part of the electrophotographic member refers to an end part in a width direction of the member.

From the viewpoint of suppressing the end part temperature rise of the electrophotographic member, the thermal conductivity λ of the interlayer in the film thickness direction is, for example, preferably larger than a thermal conductivity λ of the foamed elastic layer in the film thickness direction.

The thermal conductivity λ of the interlayer can be adjusted by selecting the type or grade of the material of each layer, and the addition amount of a reinforcing filler or the polysiloxane compound SQ.

A method of measuring the thermal conductivity λ of the interlayer and the foamed elastic layer in the film thickness direction is as follows.

A flat plate-shaped test piece is cut out from each layer. The test piece is placed in a probe of a thermal conductivity measuring device ai-Phase Mobile (manufactured by ai-Phase Co., Ltd.). Next, a 50 gf weight is placed, a thermal diffusivity is measured under conditions of 1.41 V, 3 Hz to 100 Hz divided into 10 parts, and a measurement time of 2 seconds, and the thermal conductivity is obtained from the specific heat, the density, and the thermal diffusivity of the test piece.

### (Application of Electrophotographic Member)

Examples of the electrophotographic member according to the present exemplary embodiment include a transfer member, a fixing member, and a recording medium transport member.

Examples of the transfer member include an intermediate transfer member, a primary transfer member, and a secondary transfer member.

Examples of the fixing member include a heating member and a pressurizing member. The heating member may be any of a heating belt heated by an electromagnetic induction method or a heating member heated from an external heat source. However, in a case where the electrophotographic member according to the present exemplary embodiment is applied to the heating member heated by an electromagnetic induction method, for example, a metal layer (heat generation layer) that generates heat by electromagnetic induction may be provided.

### <Fixing Device>

The fixing device according to the present exemplary embodiment includes a first rotating body and a second rotating body disposed in contact with an outer surface of the first rotary member, in which at least one of the first rotating body or the second rotating body is constituted of the electrophotographic member according to the present exemplary embodiment described above.

Examples of the fixing device according to the present exemplary embodiment include a well-known fixing device including a heating roll or a heating belt as the first rotating body and a pressurizing roll or a pressurizing belt as the second rotating body. Examples of the fixing device according to the present exemplary embodiment also include a well-known fixing device such as an electromagnetic induction heating method.

In the fixing device according to the present exemplary embodiment, the fixing member according to the present exemplary embodiment may be applied to any of the heating roll, the heating belt, the pressurizing roll, or the pressurizing belt.

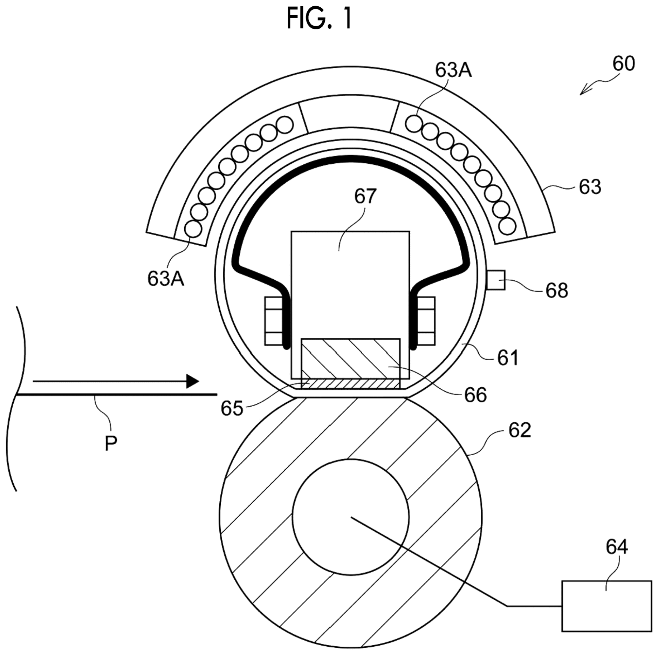

Hereinafter, as an example of the fixing device according to the exemplary embodiment, a fixing device of an electromagnetic induction heating method will be described with reference to FIG. 1.

As shown in FIG. 1, a fixing device 60 includes a heating belt 61 (an example of the first rotating body) on which a metal heat generation layer is provided, a pressurizing roll 62 (an example of the second rotating body), an electromagnetic induction heating device 63 (an example of a heating device), a latch mechanism 64, and a temperature sensor 68.

The electrophotographic member according to the present exemplary embodiment described above is applied to the pressurizing roll 62.

A sliding sheet 65, a pressing pad 66, and a support member 67 are provided inside the heating belt 61.

The sliding sheet 65 is provided between the pressing pad 66 and the heating belt 61. The sliding sheet 65 reduces a sliding resistance between the heating belt 61 and the pressing pad 66.

The pressing pad 66 is provided to press the heating belt 61 toward the pressurizing roll 62 side through the heating belt 61 in a case where the pressing pad 66 is moved to a pressurized position at which the heating belt 61 is pressurized.

The support member 67 is provided to support the pressing pad 66.

The electromagnetic induction heating device is a device that heats the metal heat generation layer of the heating belt 61 by electromagnetic induction.

A plurality of excitation coils 63A that generate a magnetic field by being supplied with power from a fixing power supply are provided in the electromagnetic induction heating device 63.

The electromagnetic induction heating device 63 changes the magnetic field generated from the excitation coils 63A by an excitation circuit. As a result, an eddy current is generated in the metal heat generation layer of the heating belt 61. The eddy current is converted into Joule heat by an electrical resistance of the metal heat generation layer, and the metal heat generation layer generates heat. As a result, the heating belt 61 is heated.

The latch mechanism 64 is a mechanism that moves the pressurizing roll 62 between a spaced position and the pressurized position.

In a case where the pressurizing roll 62 is in the spaced position, a drive target of a drive device (motor or the like; not shown) is switched to the heating belt 61. The heating belt 61 is rotationally driven by the drive device.

On the other hand, in a case where the pressurizing roll 62 is moved to the pressurized position by the latch mechanism 64, the drive target of the drive device (a motor or the like; not shown) is switched to the pressurizing roll 62, and the pressurizing roll 62 is rotationally driven by the drive device. In this case, the heating belt 61 is rotationally driven to follow the rotation of the pressurizing roll 62.

The temperature sensor 68 is provided around the heating belt 61. The temperature sensor 68 measures a surface temperature of the heating belt.

In the fixing device 60, for example, before the fixing is started, the operation of heating the metal heat generation layer of the heating belt 61 by the electromagnetic induction heating device 63 is performed in a state where the heating belt 61 spaced from the pressurizing roll 62 is rotationally driven, and then the operation of bringing the heating belt 61 into contact with the pressurizing roll 62 is performed to start the fixing.

Specifically, for example, in the fixing device 60, in a case where the image formation is started, the heating belt 61 is rotationally driven in a state in which the pressurizing roll 62 is in the spaced position before the fixing is started. A rotation speed of the heating belt 61 herein is set to be lower than the rotation speed during the fixing.

Next, the magnetic field is generated from the excitation coils 63A of the electromagnetic induction heating device 63 to heat the metal heat generation layer of the heating belt 61. As a result, the heating belt 61 is heated.

Next, the pressurizing roll 62 is moved to the pressurized position by the latch mechanism 64, and the pressurizing roll 62 is pressurized against the pressing pad 66 through the heating belt 61 and the sliding sheet 65.

Paper P (an example of the recording medium) on which the toner image is transferred is transported to a contact region between the heating belt 61 and the pressurizing roll 62 in a state in which the heating belt 61 and the pressurizing roll 62 are pressurized. As a result, the toner image is fixed to the paper P.

After the fixing operation is completed, the pressurizing roll 62 is moved to the spaced position by the latch mechanism 64.

### <Image Forming Apparatus>

Next, the image forming apparatus according to the present exemplary embodiment will be described.

The image forming apparatus according to the present exemplary embodiment includes:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
the fixing device that fixes the toner image on the surface of the recording medium.

As the fixing device, the fixing device according to the present exemplary embodiment is applied.

In the image forming apparatus according to the present exemplary embodiment, the fixing device may be made into each cartridge such that the fixing device is detachable from an image forming apparatus. That is, the image forming apparatus according to the present exemplary embodiment may include the fixing device according to the present exemplary embodiment, as a device configuring a process cartridge.

Hereinafter, the image forming apparatus according to the present exemplary embodiment will be described with reference to a drawing.

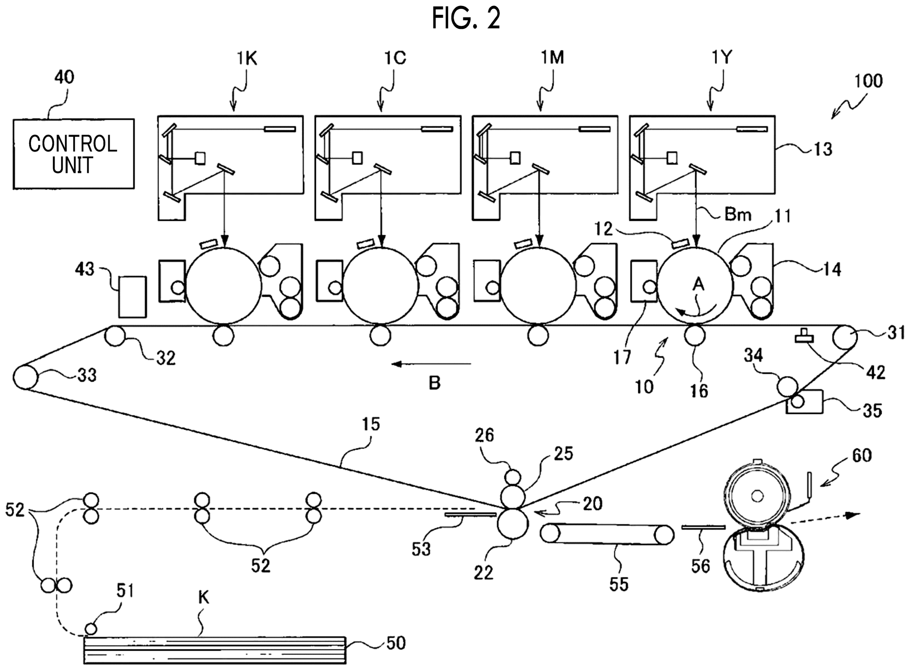

FIG. 2 is a schematic configuration view showing a configuration of the image forming apparatus according to the present exemplary embodiment.

As shown in FIG. 2, an image forming apparatus 100 according to the present exemplary embodiment is, for example, an intermediate transfer-type image forming apparatus generally called a tandem type.

The image forming apparatus 100 includes a plurality of image forming units 1Y, 1M, 1C, and 1K, an intermediate transfer belt 15, a primary transfer unit 10, a secondary transfer unit 20, and the fixing device 60. In addition, the image forming apparatus 100 includes a control unit 40 that controls the operation of each device (or each unit).

Here, the image forming units 1Y, 1M, 1C, and 1K are image forming units that form a toner image of each color component by an electrophotographic method.

The primary transfer unit 10 is a transfer unit that sequentially transfers (primary transfers) the toner image of each color component formed by the image forming units 1Y, 1M, 1C, and 1K to the intermediate transfer belt 15.

The secondary transfer unit 20 is a transfer unit that collectively transfers (secondary transfers) the superimposed toner images transferred to the intermediate transfer belt 15 to the paper K that is the recording medium.

The fixing device 60 is a device that fixes the image transferred by the secondary transfer to the paper K.

Each of the image forming units 1Y, 1M, 1C, and 1K of the image forming apparatus 100 includes a photoreceptor 11 that rotates in a direction of an arrow A, as an example of an image holder that holds a toner image formed on the surface.

Around the photoreceptor 11, a charger 12 that charges the photoreceptor 11 is provided as an example of the charging device. Around the photoreceptor 11, a laser exposure device 13 (exposure beam is indicated by a reference numeral Bm in the drawing) that writes an electrostatic latent image on the photoreceptor 11 is provided as an example of the electrostatic latent image forming device.

Around the photoreceptor 11, a developer 14 that accommodates the toner of each color component and visualizes the electrostatic latent image on the photoreceptor 11 with the toner is provided as an example of the developing device.

Around the photoreceptor 11, a primary transfer roll 16 that transfers the toner image of each color component formed on the photoreceptor 11 to the intermediate transfer belt 15 by the primary transfer unit 10 is provided.

Around the photoreceptor 11, a photoreceptor cleaner 17 that removes a residual toner on the photoreceptor 11 is provided.

The charger 12, the laser exposure device 13, the developer 14, the primary transfer roll 16, and the photoreceptor cleaner 17 are sequentially arranged around the photoreceptor 11 along the rotation direction of the photoreceptor 11.

These image forming units 1Y, 1M, 1C, and 1K are substantially linearly arranged in order of yellow (Y), magenta (M), cyan (C), and black (K) from the upstream side of the intermediate transfer belt 15.

By various rolls, the intermediate transfer belt 15 is driven to circulate (rotate) in the direction of an arrow B shown in FIG. 2 at a speed fit for the purpose.

The various rolls include a drive roll 31, a support roll 32, a tension applying roll 33, a back roll 25, and a cleaning back roll 34.

The drive roll 31 is a roll that is driven by a motor (not shown) having an excellent constant speed property and rotates the intermediate transfer belt 15.

The support roll 32 is a roll that supports the intermediate transfer belt 15 extending in a substantially linear shape along the arrangement direction of each photoreceptor 11.

The tension applying roll 33 is a roll that is provided in the secondary transfer unit 20, has a function of applying a tension to the intermediate transfer belt 15, and prevents the intermediate transfer belt 15 from meandering.

The cleaning back roll 34 is a roll that is provided in a cleaning portion that scrapes off the residual toner on the intermediate transfer belt 15.

The primary transfer unit 10 is configured with the primary transfer roll 16 that is disposed to face the photoreceptor 11 across the intermediate transfer belt 15.

The primary transfer roll 16 is disposed to be pressed against the photoreceptor 11 with the intermediate transfer belt 15 therebetween, and a voltage with a polarity (primary transfer bias) opposite to the charging polarity (negative polarity; the same applies hereafter) of the toner is applied to the primary transfer roll 16. As a result, the toner image on each photoreceptor 11 is sequentially electrostatically sucked onto the intermediate transfer belt 15, which leads to the formation of overlapped toner images on the intermediate transfer belt 15.

The secondary transfer unit 20 is configured to include the back roll 25 and a secondary transfer roll 22 that is disposed on a toner image-holding surface side of the intermediate transfer belt 15.

The secondary transfer roll 22 is disposed to be pressed on the back roll 25 across the intermediate transfer belt 15, and the secondary transfer roll 22 is grounded such that the secondary transfer bias is formed between the secondary transfer roll 22 and the back roll 25, that induces secondary transfer of the toner image onto the paper K transported to the secondary transfer unit 20.

In addition, an intermediate transfer belt cleaner 35 is provided on the downstream side of the secondary transfer unit 20 on the intermediate transfer belt 15 to be freely attachable to and detachable from the intermediate transfer belt 15.

The intermediate transfer belt cleaner 35 is a cleaner that removes the residual toner or paper powder on the intermediate transfer belt 15 after the secondary transfer, and cleans the surface of the intermediate transfer belt 15.

The intermediate transfer belt 15, the primary transfer unit 10 (primary transfer roll 16), and the secondary transfer unit 20 (secondary transfer roll 22) correspond to an example of the transfer device.

On the other hand, a reference sensor (home position sensor) 42 is disposed on an upstream side of the yellow image forming unit 1Y.

The reference sensor 42 is a sensor that generates a reference signal serving as a reference for taking an image forming timing in each of the image forming units 1Y, 1M, 1C, and 1K.

The reference sensor 42 recognizes a mark provided on a back side of the intermediate transfer belt 15 to generate the reference signal. Each of the image forming units 1Y, 1M, 1C, and 1K is configured to start the image formation in response to an instruction from the control unit 40 based on the recognition of the reference signal.

An image density sensor 43 used to adjust image quality is provided on the downstream side of the black image forming unit 1K.

The image forming apparatus 100 includes a paper storage portion 50, a paper feeding roll 51, a transport roll 52, a transport guide 53, a transport belt 55, and a fixing inlet guide 56.

The paper storage portion 50 is a storage unit that accommodates the paper K, as a transport device that transports the paper K.

The paper feeding roll 51 is a roll that takes out the paper K accumulated in the paper storage portion 50 at a predetermined timing, and transports the paper K.

The transport roll 52 is a roll that transports the paper K fed by the paper feeding roll 51.

The transport guide 53 is a guide that feeds the paper K transported by the transport roll 52 to the secondary transfer unit 20.

The transport belt 55 is a belt that transports the paper K, that is secondarily transferred by the secondary transfer roll 22, to the fixing device 60.

The fixing inlet guide 56 is a guide that guides the paper K to the fixing device 60.

Next, basic image forming process of the image forming apparatus 100 according to the present exemplary embodiment will be described.

In the image forming apparatus 100 according to the present exemplary embodiment, image data output from an image reading device (not shown), a personal computer (PC) (not shown), or the like is subjected to image processing by an image processing device (not shown), and then the image forming units 1Y, 1M, 1C, and 1K perform the image forming operation.

In the image processing device, various types of image processing, such as shading correction, misregistration correction, brightness/color space conversion, gamma correction, frame removal or color editing, and movement editing, are performed on input image data. Image data on which the image processing is performed are converted into coloring material gradation data of four colors, that is, Y, M, C, and K, and are output to the laser exposure device 13.

In the laser exposure device 13, according to the input color material gradation data, for example, the photoreceptor 11 of each of the image forming units 1Y, 1M, 1C, and 1K is irradiated with an exposure beam Bm emitted from a semiconductor laser. The surface of each of the photoreceptors 11 of the image forming units 1Y, 1M, 1C, and 1K is charged by the charger 12, and is then scanned and exposed by the laser exposure device 13, so that the electrostatic latent image is formed. By each of the image forming units 1Y, 1M, 1C, and 1K, the formed electrostatic latent image is developed as a toner image of each of the colors Y, M, C, and K.

The toner image formed on each of the photoreceptors 11 of the image forming units 1Y, 1M, 1C, and 1K is transferred onto the intermediate transfer belt 15 at the primary transfer unit 10 where each photoreceptor 11 and the intermediate transfer belt 15 are in contact with each other. More specifically, in the primary transfer unit 10, by the primary transfer roll 16, a voltage (primary transfer bias) with a polarity opposite to the charging polarity (negative polarity) of the toner is applied to the base material of the intermediate transfer belt 15, and the toner images are sequentially overlapped on the surface of the intermediate transfer belt 15 and subjected to primary transfer.

After the primary transfer by which the toner images are sequentially transferred to the surface of the intermediate transfer belt 15, the intermediate transfer belt 15 moves, and the toner images are transported to the secondary transfer unit 20. In a case where the toner images are transported to the secondary transfer unit 20, in the transport device, the paper feeding roll 51 rotates in accordance with the timing at which the toner images are transported to the secondary transfer unit 20, and the paper K having the target size is fed from the paper storage portion 50. The paper K fed from the paper feeding roll 51 is transported by the transport roll 52, passes through the transport guide 53, and reaches the secondary transfer unit 20. Before reaching the secondary transfer unit 20, the paper K is temporarily stopped, and a positioning roll (not shown) rotates according to the movement timing of the intermediate transfer belt 15 holding the toner image, so that the position of the paper K is aligned with the position of the toner image.

In the secondary transfer unit 20, through the intermediate transfer belt 15, the secondary transfer roll 22 is pressed on the back roll 25. At this time, the paper K transported at the right timing is interposed between the intermediate transfer belt 15 and the secondary transfer roll 22. At this time, in a case where a voltage (secondary transfer bias) with the same polarity as the charging polarity (negative polarity) of the toner is applied from the power supply roll 26, a transfer electric field is formed between the secondary transfer roll 22 and the back roll 25. In the secondary transfer unit 20 pressed by the secondary transfer roll 22 and the back roll 25, the unfixed toner images held on the intermediate transfer belt 15 are electrostatically transferred onto the paper K in a batch.

Thereafter, the paper K on which the toner image is electrostatically transferred is transported as it is in a state of being peeled off from the intermediate transfer belt 15 by the secondary transfer roll 22. The paper K is transported to the transport belt 55 provided on a downstream side of the secondary transfer roll 22 in the paper transport direction. The transport belt 55 transports the paper K to the fixing device 60 according to the optimum transport speed in the fixing device 60. The unfixed toner images on the paper K transported to the fixing device 60 are fixed on the paper K by being subjected to a fixing treatment by heat and pressure by the fixing device 60. The paper K on which the fixed image is formed is transported to an ejected paper-storing portion (not shown) provided in an output portion of the image forming apparatus 100.

On the other hand, after the transfer to the paper K is completed, the residual toner remaining on the intermediate transfer belt 15 is transported to the cleaning unit with the rotation of the intermediate transfer belt 15. The residual toner is removed from the intermediate transfer belt 15 by the cleaning back roll 34 and the intermediate transfer belt cleaner 35.

Although the present exemplary embodiment has been described, the present exemplary embodiment is not limited to the above-described exemplary embodiments, and various modifications, changes, and ameliorations can be added thereto.

### [Examples]

Hereinafter, the present exemplary embodiment will be described in more detail with reference to Examples, but the present exemplary embodiment is not limited to Examples. In the following description, "part" represents "part by mass" unless otherwise specified.

### <Example 1>

First, an aluminum substrate having a diameter of 20 mm is prepared.

Next, a foamed elastic layer is formed on an outer periphery of the aluminum substrate as follows.

3 parts of a crosslinking agent (C-25B, manufactured by Shin-Etsu Chemical Co., Ltd.), 0.25 parts of a catalyst (C-25A, manufactured by Shin-Etsu Chemical Co., Ltd.), 8 parts of a chemical foaming agent (KE-P-26, manufactured by Shin-Etsu Chemical Co., Ltd.), and 0.5 parts of a colorant (KE-COLOR, manufactured by Shin-Etsu Chemical Co., Ltd.) are added to 100 parts of silicone rubber (RBB-6650-50, manufactured by Dow Toray Co., Ltd.), and the obtained mixture is kneaded with a roller. Thereafter, the kneaded material is compressionmolded on the aluminum substrate, and a polishing treatment is carried out to form a foamed elastic layer having a thickness of 5 mm.

Next, an interlayer is formed on an outer periphery of the foamed elastic layer as follows.

A primer (PRIMER-NO. 31-A/B, manufactured by Shin-Etsu Chemical Co., Ltd.) is applied onto the foamed elastic layer, and a carbon fiber-blended PEEK resin tube having a thickness of 20 µm (thermal conductivity: 0.5 W/m·K, storage elastic modulus: 5 GPa) is coated thereon to form an interlayer.

Next, a surface layer is formed on an outer periphery of the interlayer as follows.

SQ1 ("OX-SQ-SI20", manufactured by TOAGOSEI CO., LTD.; a polysiloxane compound having a T unit represented by a formula: [R¹SiO_{3/2}]ₘ (in the formula, R¹ = a methyl group or an oxetanyl group) and a D unit represented by a formula: (R²R³SiO_{2/2})ₙ (in the formula, R² and R³ = methyl groups)) is applied by a blade coating method to a thickness of 50 µm, and cured by ultraviolet (UV) irradiation to form a surface layer.

Through the above-described operation, an electrophotographic member is obtained.

### <Example 2>

An electrophotographic member is obtained in the same manner as in Example 1, except that SQ3 ("SR-23", KONISHI CHEMICAL IND CO., LTD.; a polysiloxane compound having only a T unit represented by a formula [R¹SiO_{3/2}]ₘ (in the formula, R¹ = a phenyl group)) is used, and heating at 200°C for 4 hours is carried out instead of the ultraviolet (UV) irradiation.

### <Example 3>

An electrophotographic member is obtained in the same manner as in Example 1, except that the interlayer is not formed.

### <Example 4>

An electrophotographic member is obtained in the same manner as in Example 1, except that a silicone rubber layer having a storage elastic modulus of 3 Mpa and a thermal conductivity of 0.3 W/m·K is formed as the interlayer.

### <Example 5>

An electrophotographic member is obtained in the same manner as in Example 1, except that a PEI resin layer having a storage elastic modulus of 1 GPa and a thermal conductivity of 0.3 W/m·K is formed as the interlayer.

### <Example 6>

An electrophotographic member is obtained in the same manner as in Example 1, except that a carbon fiber-blended PEEK resin tube having a storage elastic modulus of 10 GPa and a thermal conductivity of 0.8 W/m·K is used as the interlayer.

### <Example 7>

An electrophotographic member is obtained in the same manner as in Example 1, except that a carbon fiber-blended PEEK resin tube having a storage elastic modulus of 12.5 GPa and a thermal conductivity of 0.9 W/m·K is used as the interlayer.

### <Example 8>

An electrophotographic member is obtained by using, as the interlayer, a PEEK resin tube having a storage elastic modulus of 3 GPa and a thermal conductivity of 0.3 W/m·K, and using, as the surface layer, a film (storage elastic modulus: 0.5 GPa) that is obtained by dispersing particles of SQ4 ("Gransil PSQ", Grant Industries, Inc.;a polysiloxane compound having only a T unit represented by a formula: [R¹SiO_{3/2}]ₘ (in the formula, R¹ = a methyl group) in silicone rubber at 30% by volume and heating the mixture at 200°C for 4 hours.

### <Example 9>

An electrophotographic member is obtained in the same manner as in Example 8, except that a film (storage elastic modulus: 5 GPa) that is obtained by dispersing the SQ4 in a PEEK resin at 30% by volume, heating the mixture at 400°C, injection-molding the heated mixture is used as the surface layer.

### <Comparative Example 1>

An electrophotographic member is obtained in the same manner as in Example 3, except that a silicone rubber layer (storage elastic modulus: 3 MPa) is used as the surface layer.

### <Evaluation of Characteristics>

The following characteristics of the electrophotographic member of each of Examples are measured by the above-described method.
· Storage elastic modulus of each layer
· Thermal conductivity λ of interlayer in film thickness direction

### <Actual Machine Evaluation>

Each of the electrophotographic members of Examples is mounted on an evaluation image forming apparatus ("Apeos C5571" manufactured by FUJIFILM Business Innovation Corp.) as a pressurizing roll of a fixing device.

The following evaluations are performed by the evaluation image forming apparatus.

### (Toner Offset: Evaluation of Having Release Properties)

A black solid image is printed on both sides of general paper (C2 paper, manufactured by Fujifilm Business Innovation Corporation), the paper is passed through white paper, and a toner offset amount on a back surface of the white paper (toner contamination on the back surface of the paper caused by the toner adhering to the pressurizing member) is evaluated.

The evaluation standard is as follows. The toner offset amount on the back surface of the white paper is visually checked, and
in a case where the toner offset is not visible to the naked eye unless observed in an enlarged manner, it is determined that occurrence of the toner offset is within the allowable range.
A: no toner offset occurs.
B: toner offset occurs within allowable range.
C: toner offset occurs outside allowable range.

### (Image Unevenness: Evaluation of Image Unevenness due to Pressure Unevenness caused by Surface Property of Foamed Elastic Layer)

A black solid image is printed on both sides of general paper (C2 paper, manufactured by Fujifilm Business Innovation Corporation), and image unevenness is evaluated.

The evaluation standard is as follows. The image unevenness is evaluated by visual observation, and in a case where the image unevenness is the same as density unevenness that occurs even in the actual product and is not caused by the surface property of the foamed elastic layer, the image unevenness is within the allowable range.
A: no image unevenness occurs.
B: image unevenness occurs within allowable range.
C: image unevenness occurs outside allowable range.

### (End Part Glossiness Unevenness: Evaluation of Suppression of End Part Temperature Rise)

The paper is transported in a vertical direction, a black solid image is continuously printed on 50 A4-sized papers, the black solid image is printed on an A3-sized paper, and glossiness unevenness of an end part and a central part of the paper is evaluated.

The evaluation standard is as follows. In a case where a degree of the glossiness of the end part and the central part of the paper is measured at an angle of 60° using a Micro-Gloss glossmeter, and a difference in degree of the glossiness between the end part and the central part of the paper is within 2°, it is determined that the gloss unevenness is within the allowable range.
A: no glossiness unevenness occurs.
B: glossiness unevenness occurs within allowable range.
C: glossiness unevenness occurs outside allowable range.

### <Used Materials>

Details of the materials used in each example are as follows.
· SQ1: "OX-SQ-SI20", TOAGOSEI CO., LTD., polysiloxane compound having a T unit represented by the formula: [R¹SiO_{3/2}]ₘ (in the formula, R¹ = a methyl group and an oxetanyl group) and a D unit represented by the formula: (R²R³SiO_{2/2})ₙ (in the formula, R² and R³ = methyl groups)
. SQ2: "SR-13H", KONISHI CHEMICAL IND CO., LTD., polysiloxane compound having only T unit represented by the formula [R¹SiO_{3/2}]ₘ (in the formula, R¹ = a methyl group)
· SQ3: "SR-23", KONISHI CHEMICAL IND CO., LTD., polysiloxane compound having only T unit represented by the formula [R¹SiO_{3/2}]ₘ (in the formula, R¹ = a phenyl group)
. SQ4: "Gransil PSQ", Grant Industries, Inc., particles of a polysiloxane compound having only T unit represented by the formula: [R¹SiO_{3/2}]ₘ (in the formula, R¹ = a methyl group), volume average particle diameter: 4 to 6 µm

**[Table 1]**

| | Foamed elastic layer | Interlayer | | | Surface layer | | | Evaluation | | |
|---|---|---|---|---|---|---|---|---|---|---|
| | Type | Type | Storage elastic modulus | Thermal conductivity in film thickness direction | Polysiloxane compound SQ | | Storage elastic modulus | Toner offset | Image unevenness | End part glossiness unevenness |
| | | | | | Type | Amount | | | | |
| | | | MPa | W/m·K | | % by volume | MPa | | | |
| Example 1 | Foamed silicone rubber | Carbon fiber-blended PEEK | 5000 | 0.5 | SQ1 | 100 | 1000 | A | A | A |
| Example 2 | Foamed silicone rubber | Carbon fiber-blended PEEK | 5000 | 0.5 | SQ3 | 100 | 3000 | B | A | A |
| Example 3 | Foamed silicone rubber | None | - | - | SQ1 | 100 | 1000 | A | C | B |
| Example 4 | Foamed silicone rubber | Si rubber | 3 | 0.3 | SQ1 | 100 | 1000 | A | B | B |
| Example 5 | Foamed silicone rubber | PEI | 1000 | 0.3 | SQ1 | 100 | 1000 | A | A | B |
| Example 6 | Foamed silicone rubber | Carbon fiber-blended PEEK | 10000 | 0.8 | SQ1 | 100 | 1000 | A | A | A |
| Example 7 | Foamed silicone rubber | Carbon fiber-blended PEEK | 12500 | 0.9 | SQ1 | 100 | 1000 | B | A | A |
| Example 8 | Foamed silicone rubber | PEEK | 3000 | 0.3 | SQ4 | 30 | 500 | A | A | B |
| Example 9 | Foamed silicone rubber | PEEK | 3000 | 0.3 | SQ4 | 30 | 5000 | A | A | B |
| Comparative Example 1 | Foamed silicone rubber | None | - | - | Si rubber | 100 | 3 | C | C | C |

From the above results, it is found that the electrophotographic member of the present example is an electrophotographic member having release properties without using a fluorine material, as compared with the electrophotographic members of Comparative Examples.

### <Examples 101 to 105>

A coating film of a coating liquid having the same formulation as in Example 1 is formed by a coating method according to Table 2, and the coating film is dried and cured to form a surface layer. An electrophotographic member is obtained in the same manner as in the example to which the formulation of the coating liquid for forming the surface layer is applied, except for the above.

### (Property Evaluation/Actual Machine Evaluation)

As a result of evaluating the property evaluation/actual machine evaluation of the electrophotographic member of each example, the same evaluation results as in Example 1 are obtained.

### (Coating Defects of Surface Layer)

Coating defects of the surface layer of the electrophotographic member of each of Examples is evaluated as follows.

### -Spiral trace-

A surface of the surface layer is visually observed and evaluated according to the following standard.
A: no spiral trace is visible.
B: spiral trace is slightly visible.

### -Drip-

A film thickness difference Δ of the surface layer at a position 40 mm inward in the axial direction from both end parts is measured and evaluated according to the following standard.
A: film thickness difference Δ is 0 µm or more and 5 µm or less.
B: film thickness difference Δ is more than 5 µm and 10 µm or less.

### -Surface roughness-

A surface of the surface layer is visually observed and evaluated according to the following standard.
A: no roughness in the pear skin is visible.
B: roughness in the pear skin is slightly visible.

### -Coating streaks-

A surface of the surface layer is visually observed and evaluated according to the following standard.
A: no coating streaks are visible.
B: coating streaks are slightly visible.

**[Table 2]**

| | Coating method | Evaluation result | | | |
|---|---|---|---|---|---|
| | | Spiral trace | Drip | Surface roughness | Coating streaks |
| Example 101 | Blade coating method | B | A | A | A |
| Example 102 | Dip coating method | A | B | A | A |
| Example 103 | Spray coating method | A | A | B | A |
| Example 104 | Ring coating method | A | B | A | A |
| Example 105 | Brush coating method | A | A | A | B |

From the above results, it is found that, in a case where the surface layer is formed by the blade coating method, the dip coating method, the spray coating method, the ring coating method, or the brush coating method using the coating liquid having the formulation of the surface layer of the present example, a surface layer having reduced coating defects can be formed.

The present exemplary embodiments include the following aspects.
(((1))) An electrophotographic member comprising:
   a foamed elastic layer; and
   a surface layer that is provided on the foamed elastic layer,
   wherein the surface layer contains a polysiloxane compound having a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group).
(((2))) The electrophotographic member according to (((1))),
   wherein the group including at least one of an alkyl group or an aryl group is a group including an alkyl group.
(((3))) The electrophotographic member according to (((1))) or (((2))), further comprising:
   an interlayer provided between the foamed elastic layer and the surface layer.
(((4))) The electrophotographic member according to (((3))),
   wherein a storage elastic modulus of the interlayer is larger than a storage elastic modulus of the surface layer.
(((5))) The electrophotographic member according to (((4))),
   wherein the storage elastic modulus of the interlayer is 1 GPa or more and 10 GPa or less, and
   the storage elastic modulus of the surface layer is 500 MPa or more and 3 GPa or less.
(((6))) The electrophotographic member according to (((4))) or (((5))),
   wherein a thermal conductivity λ of the interlayer in a film thickness direction is 0.3 W/m·K or more.
(((7))) A fixing device comprising:
   a first rotating body; and
   a second rotating body disposed in contact with an outer surface of the first rotating body,
   wherein at least one of the first rotating body or the second rotating body is constituted of the electrophotographic member according to any one of (((1))) to (((6))).
(((8))) An image forming apparatus comprising:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to (((7))), that fixes the toner image on the surface of the recording medium.
(((9))) A method of forming the surface layer of the electrophotographic member according to any one of (((1))) to (((6))), the method comprising:
   forming the surface layer by a blade coating method.
(((10))) A method of forming the surface layer of the electrophotographic member according to any one of (((1))) to (((6))), the method comprising:
   forming the surface layer by a dip coating method.
(((11))) A method of forming the surface layer of the electrophotographic member according to any one of (((1))) to (((6))), the method comprising:
   forming the surface layer by a spray coating method.
(((12))) A method of forming the surface layer of the electrophotographic member according to any one of (((1))) to (((6))), the method comprising:
   forming the surface layer by a ring coating method.
(((13))) A method of forming the surface layer of the electrophotographic member according to any one of (((1))) to (((6))), the method comprising:
   forming the surface layer by a brush coating method.

The effects of the above-described aspects are as follows.

According to (((1))), there is provided an electrophotographic member including a foamed elastic layer and a surface layer provided on the foamed elastic layer, in which the electrophotographic member has release properties without using a fluorine material.

According to (((2))), there is provided an electrophotographic member that has excellent release properties as compared to a case where the group including at least one of an alkyl group or an aryl group is a group including a phenyl group.

According to (((3))), there is provided an electrophotographic member in which a surface property of the surface layer is less likely to be affected by a surface property of the foamed elastic layer, as compared to a case where the surface layer is directly provided on the foamed elastic layer.

According to (((4))), there is provided an electrophotographic member in which a surface property of the surface layer is less likely to be affected by a surface property of the foamed elastic layer, as compared to a case where the storage elastic modulus of the interlayer is smaller than the storage elastic modulus of the surface layer.

According to (((5))), there is provided an electrophotographic member in which a surface property of the surface layer is less likely to be affected by a surface property of the foamed elastic layer, as compared to a case where the storage elastic modulus of the interlayer and the storage elastic modulus of the surface layer do not satisfy the above-described ranges.

According to (((6))), there is provided an electrophotographic member in which end part temperature rise can be suppressed as compared to a case where the thermal conductivity λ of the interlayer in the film thickness direction is less than 0.3 W/m·K.

According to (((7))) or (((8))), there is provided a fixing device or an image forming apparatus, including an electrophotographic member including a foamed elastic layer and a surface layer provided on the foamed elastic layer, in which the electrophotographic member has release properties without using a fluorine material.

According to (((9))), (((10))), (((11))), (((12))), or (((13))), there is provided a method of forming a surface layer of an electrophotographic member that has release properties and has reduced coating defects without using a fluorine material, by a blade coating method, a dip coating method, a spray coating method, a ring coating method, or a brush coating method.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents. Brief Description of the Reference Symbols
60: fixing device
61: heating belt
62: pressurizing roll
63: electromagnetic induction heating device
63A: excitation coil
64: latch mechanism
65: sliding sheet
66: pressing pad
67: support member
68: temperature sensor
100: image forming apparatus

## Claims

1. An electrophotographic member comprising:
a foamed elastic layer; and
a surface layer that is provided on the foamed elastic layer,
wherein the surface layer contains a polysiloxane compound having a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group).

2. The electrophotographic member according to claim 1,
wherein the group including at least one of an alkyl group or an aryl group is a group including an alkyl group.

3. The electrophotographic member according to claim 1 or 2, further comprising:
an interlayer provided between the foamed elastic layer and the surface layer.

4. The electrophotographic member according to claim 3,
wherein a storage elastic modulus of the interlayer is larger than a storage elastic modulus of the surface layer.

5. The electrophotographic member according to claim 4,
wherein the storage elastic modulus of the interlayer is 1 GPa or more and 10 GPa or less, and
the storage elastic modulus of the surface layer is 500 MPa or more and 3 GPa or less.

6. The electrophotographic member according to claim 4 or 5,
wherein a thermal conductivity λ of the interlayer in a film thickness direction is 0.3 W/m·K or more.

7. A fixing device comprising:
a first rotating body; and
a second rotating body disposed in contact with an outer surface of the first rotating body,
wherein at least one of the first rotating body or the second rotating body is constituted of the electrophotographic member according to any one of claims 1 to 6.

8. An image forming apparatus comprising:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
the fixing device according to claim 7, that fixes the toner image on the surface of the recording medium.

9. A method of forming the surface layer of the electrophotographic member according to any one of claims 1 to 6, the method comprising:
forming the surface layer by a blade coating method.

10. A method of forming the surface layer of the electrophotographic member according to any one of claims 1 to 6, the method comprising:
forming the surface layer by a dip coating method.

11. A method of forming the surface layer of the electrophotographic member according to any one of claims 1 to 6, the method comprising:
forming the surface layer by a spray coating method.

12. A method of forming the surface layer of the electrophotographic member according to any one of claims 1 to 6, the method comprising:
forming the surface layer by a ring coating method.

13. A method of forming the surface layer of the electrophotographic member according to any one of claims 1 to 6, the method comprising:
forming the surface layer by a brush coating method.
